(19) **Europäisches Patentamt**

**European Patent Office**

**Office européen des brevets**

(11) **EP 1 204 814 B1**

(12) **EUROPÄISCHE PATENTSCHRIFT**

(45) Veröffentlichungstag und Bekanntmachung des Hinweises auf die Patenterteilung:
**08.12.2004 Patentblatt 2004/50**

(21) Anmeldenummer: **00954279.6**

(22) Anmeldetag: **16.06.2000**

(51) Int Cl.⁷: **F01N 3/08**, F02D 41/00

(86) Internationale Anmeldenummer:
**PCT/DE2000/002006**

(87) Internationale Veröffentlichungsnummer:
**WO 2001/009490 (08.02.2001 Gazette 2001/06)**

(54) **VERFAHREN ZUM BETREIBEN EINER BRENNKRAFTMASCHINE**

METHOD FOR THE OPERATION OF AN INTERNAL COMBUSTION ENGINE

PROCEDE PERMETTANT DE FAIRE FONCTIONNER UN MOTEUR A COMBUSTION INTERNE

(84) Benannte Vertragsstaaten:
**DE FR IT**

(30) Priorität: **31.07.1999 DE 19936200**

(43) Veröffentlichungstag der Anmeldung:
**15.05.2002 Patentblatt 2002/20**

(73) Patentinhaber: **ROBERT BOSCH GMBH**
**70442 Stuttgart (DE)**

(72) Erfinder: **POSSELT, Andreas**
**D-75417 Muehlacker (DE)**

(56) Entgegenhaltungen:
**EP-A- 0 690 213** **EP-A- 0 903 479**
**US-A- 5 771 685**

**Beschreibung**

Stand der Technik

Die Erfindung betrifft ein Verfahren zum Betreiben einer Brennkraftmaschine insbesondere eines Kraftfahrzeugs, bei dem Kraftstoff in einer fetten und in. einer mageren Betriebsart in einen Brennraum eingespritzt wird, bei dem zwischen der fetten und der mageren Betriebsart umgeschaltet wird, und bei dem Stickoxide in einem Katalysator gespeichert werden. Die Erfindung betrifft ebenfalls eine entsprechende Brennkraftmaschine sowie ein Steuergerät für eine derartige Brennkraftmaschine.

Ein derartiges Verfahren, eine derartige Brennkraftmaschine und ein derartiges Steuergerät sind beispielsweise von einer sogenannten Benzin-Direkteinspritzung bekannt. Dort wird Kraftstoff in einer fetten Betriebsart, z.B.-in einem Homogenbetrieb während der Ansaugphase oder in einer mageren Betriebsart, z.B. in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlaufund Teillastbetrieb geeignet ist. Beispielsweise in Abhängigkeit von einer erwünschten Soll-Betriebsart wird bei einer derartigen direkteinspritzenden Brennkraftmaschine zwischen den genannten Betriebsarten umgeschaltet.

EP-A-0 903 479 offenbart eine mager und fett betriebene Brennkraftmaschine insbesondere eines Kraftfahrzeugs.

In der mager und fett betriebene Brennkraftmaschine wird Stickoxide in einem Katalysator gespeichert, wobei nach nach dem Katalysator das Lambda des Abgases gemessen wird,wodurch nach einem Umschalten der Brennkraftmaschine in die magere Betriebsart ein erster Zeitraum gemessen wird, der vergeht, bis das gemessene Lambda fett wird; es wird auch ein weiterer Zeitraum gemessen, der vergeht, bis der gemessene Lambdawert mager wird. Nach der o.g. Schrift werden diese Zeiten sowie daraus abgeleiteten Werte eingesetzt um die Funktionsfähigkeit des Katalysators beim Überschreiten von Grenzwerten festzustellen.

Insbesondere in dem mageren Schichtbetrieb sind NOx-Anteile, also Stickoxide im Abgas vorhanden, die durch einen 3-Wege-Katalysator nicht nachbehandelt werden können. Hierzu ist ein Speicherkatalysator vorgesehen, der die Stickoxide speichert, um sie dann in einer nachfolgenden fetten Betriebsart der Brennkraftmaschine wieder abzugeben. Da die Speicherfähigkeit des Speicherkatalysators begrenzt ist, muss dieser ständig be- und entladen werden. Dies kann beispielsweise mit Hilfe eines Lambdasensors vor dem Katalysator dadurch gesteuert und/oder geregelt werden, dass die Speicherfähigkeit des Speicherkatalysators modelliert wird.

In dem Lambdasensor und/oder in der Modellierung können Fehler auftreten. Diese Fehler können zu einer bleibenden fehlerhaften Steuerung und/oder Regelung des Be- und Entladens des Speicherkatalysators führen.

Aufgabe der Erfindung ist es, aufzuzeigen wie eine Brennkraftmaschine mit dem das Be- und Entladen des Speicherkatalysators auch langfristig korrekt gesteuert und/oder geregelt wird.

Diese Aufgabe wird bei einem Verfahren der eingangs genannten Art erfindungsgemäß gelöst mit den Merkmalen gemäß Anspruch 1. Bei einer Brennkraftmaschine und einem Steuergerät der eingangs genannten Art wird die Aufgabe erfindungsgemäß entsprechend gelöste mit den Merkmalen gemäß Anspruch 7 bzw. 8.

Nach dem Katalysator ist also ein zweiter Lambdasensor angeordnet, mit dem das Lambda.des Abgases gemessen wird. Wird nunmehr die Brennkraftmaschine von dem Steuergerät in die magere Betriebsart umgeschaltet, so wird danach derjenige Zeitraum gemessen, der vergeht, bis das von dem zweiten Lambdasensor gemessene Lambda mager wird. Dieser Zeitraum ist eine Größe, die den Betriebszustand des Speicherkatalysators charakterisiert.

Es kann nun z.B. von dem Hersteller des Speicherkatalysators auf entsprechende Weise ein Wert ermittelt und vorgegeben werden, der die Grenze eines korrekten Betriebszustands des Speicherkatalysators darstellt. Der gemessene Zeitraum kann dann von dem Steuergerät mit dieser Grenze verglichen werden. Wenn keine Überschreitung vorliegt, so arbeitet der Speicherkatalysator auf eine korrekte Art und Weise. Wird jedoch eine Überschreitung festgestellt, so bedeutet dies, dass der Speicherkatalysator in einem nicht mehr zulässigen Betriebszustand sich befindet bzw. arbeitet. In diesem Fall kann von dem Steuergerät die Steuerung und/oder Regelung der Brennkraftmaschine derart beeinflusst werden, dass wieder ein korrekter Betrieb des Speicherkatalysators erreicht wird.

Auf diese Weise ist es mit Hilfe des zweiten Lambdasensors und eines entsprechenden Betriebs der Brennkraftmaschine möglich, das korrekte Be- und Entladen des Speicherkatalysators auch langfristig zu gewährleisten.

Bei einer vorteilhaften Weiterbildung der Erfindung wird nach einem Umschalten der Brennkraftmaschine in die magere Betriebsart ein zweiter Zeitraum gemessen, in dem die Brennkraftmaschine mager betrieben wird. Der erste Zeitraum und der zweite Zeitraum werden dann miteinander verknüpft. Vorzugsweise wird ein Wert ermittelt, der das Verhältnis des ersten Zeitraums zu einem dritten Zeitraum darstellt, wobei die Summe aus dem ersten Zeitraum und dem dritten Zeitraum den zweiten Zeitraum ergibt. Damit ist es möglich, auf besonders einfache, aber genaue Weise eine zuverlässige Aussage über den Betriebszustand des Speicherkatalysators zu erhalten.

Bei einer weiteren vorteilhaften Weiterbildung der Erfindung wird die Steuerung und/oder Regelung der Brennkraftmaschine beeinflusst, wenn der erste Zeitraum oder ein davon abhängiger Wert einen vorgegebenen Wert überschreitet. Der vorgegebene Wert charakterisiert dabei den maximal zulässigen Betriebszustand des Speicherkatalysators, der nicht überschritten werden darf.

Besonders vorteilhaft ist es, wenn der Zeitraum, in dem die Brennkraftmaschine fett betrieben wird, verlängert wird, und/oder wenn der Zeitraum, in dem die Brennkraftmaschine mager betrieben wird, verkürzt wird. Dies stellen Reaktionen des Steuergeräts auf ein Überschreiten des maximal zulässigen Betriebszustands des Speicherkatalysators dar.

Als weiterer Vorteil ist'es möglich, dass die Beeinflussung der Brennkraftmaschine adaptiv in die Steuerung und/oder Regelung eingreift. Damit kann das Modell des Be- und Entladens des Speicherkatalysators auch an langfristige Veränderungen desselben angepasst werden.

Von besonderer Bedeutung ist die Realisierung des erfindungsgemäßen Verfahrens in der Form eines Steuerelements, gemäß Anspruch 6.

In diesem Fall wird also die Erfindung durch ein auf dem Steuerelement abgespeichertes Programm realisiert. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

Figur 1  zeigt ein schematisches Blockschaltbild eines Ausführungsbeispiels einer erfindungsgemäßen Brennkraftmaschine,

Figur 2  zeigt ein schematisches Zeitdiagramm zu einem Ausführungsbeispiel eines erfindungsgemäßen Verfahrens zum Betreiben der Brennkraftmaschine der Figur 1.

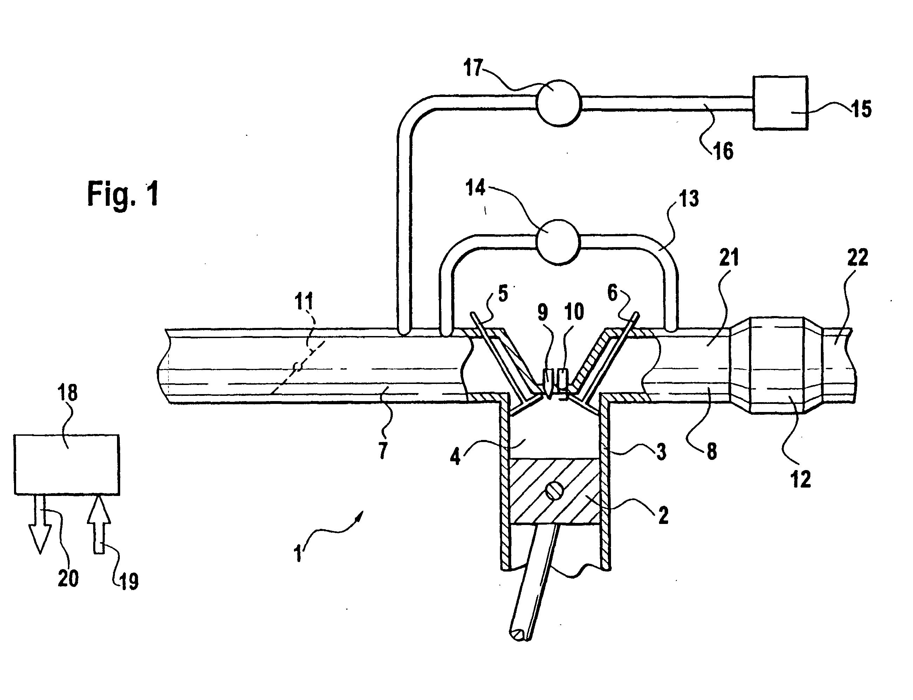

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Von dem Abgasrohr 8 führt eine Abgasrückführrohr 13 zurück zu dem Ansaugrohr 7. In dem Abgasrückführrohr 13 ist ein Abgasrückführventil 14 untergebracht, mit dem die Menge des in das Ansaugrohr 7 rückgeführten Abgases eingestellt werden kann. Das Abgasrückführrohr 13 und das Abgasrückführventil 14 bilden eine sogenannte Abgasrückführung.

Von einem Kraftstofftank 15 führt eine Tankentlüftungsleitung 16 zu dem Ansaugrohr 7. In der Tankentlüftungsleitung 16 ist ein Tankentlüftungsventil 17 untergebracht, mit dem die Menge des dem Ansaugrohr 7 zugeführten Kraftstoffdampfes aus dem Kraftstofftank 15 einstellbar ist. Die Tankentlüftungsleitung 16 und das Tankentlüftungsventil 17 bilden eine sogenannte Tankentlüftung.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des Weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Stellern das Verhalten der Erennkraftmaschine 1 beeinflusst werden kann. Beispielsweise ist das Steuergerät 18 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

Die Brennkraftmaschine 1 der Figur 1 kann in einer Mehrzahl von Betriebsarten betrieben werden. So ist es möglich, die Brennkraftmaschine 1 in einem Homogenbetrieb, einem Schichtbetrieb, einem homogenen Magerbetrieb und' dergleichen betrieben werden. Zwischen den genannten Betriebsarten der Brennkraftmaschine 1 kann hin- und her- bzw. umgeschaltet werden. Derartige Umschaltungen werden von dem Steuergerät 18 durchgeführt.

Im Homogenbetrieb wird der Kraftstoff während der Ansaugphase von dem Einspritzventil 9 direkt in den Brennraum 4 der Brennkraftmaschine 1 eingespritzt. Der Kraftstoff wird dadurch bis zur Zündung noch weitgehend verwirbelt, so dass im Brennraum 4 ein im Wesentlichen homogenes Kraftstoff/Luft-Gemisch entsteht. Das zu erzeugende Moment wird dabei im Wesentlichen über die Stellung der Drosselklappe 11 von dem Steuergerät 18 eingestellt. Im Homogenbetrieb werden die Betriebsgrößen der Brennkraftmaschine 1 derart gesteuert und/oder geregelt, dass Lambda = 1 ist. Der Homogenbetrieb wird insbesondere bei Vollast angewendet.

Im Schichtbetrieb wird der Kraftstoff während der Verdichtungsphase von dem Einspritzventil 9 direkt in den Brennraum 4 der Brennkraftmaschine 1 eingespritzt. Damit ist bei der Zündung durch die Zündkerze 10 kein homogenes Gemisch im Brennraum 4 vorhanden, sondern eine Kraftstoffschichtung. Die Drosselklappe 11 kann, abgesehen von Anforderungen z.B. der Abgasrückführung und/oder der Tankentlüftung, vollständig geöffnet und die Brennkraftmaschine 1 damit entdrosselt betrieben werden. Das zu erzeugende Moment wird im Schichtbetrieb weitgehend über die Kraftstoffmasse eingestellt. Mit dem Schichtbetrieb kann die Brennkraftmaschine 1 insbesondere im Leerlauf und bei Teillast betrieben werden.

Bei dem Katalysator 12 handelt es sich um eine Kombination eines 3-Wege-Katalysators und eines Speicherkatalystors. Mit dem 3-Wege-Katalysator werden unabhängig von der Betriebsart kontinuierlich die schädlichen Bestandteile des Abgases nachbehandelt bzw. umgesetzt. Der 3-Wege-Katalysator ist jedoch nicht in der Lage, die im Schichtbetrieb entstehenden NOx-Anteile des Abgases zu verarbeiten. Hierzu ist der Speicherkatalysator vorgesehen.

Der Speicherkatalysator bindet die NOx-Anteile des Abgases im mageren Betrieb der Brennkraftmaschine 1, also bei Sauerstoffüberschuss, z.B. insbesondere während des Schichtbetriebs. Wird die Brennkraftmaschine 1 danach mit einem Kraftstoffüberschuss, also fett betrieben, so gibt der Speicherkatalysator die gebundenen NOx-Anteile wieder frei, so dass diese von dem 3-Wege-Katalysator reduziert und damit nachbehandelt werden können.

Die Speicherfähigkeit des Speicherkatalysators ist nicht unbegrenzt. Aus diesem Grund wird z.B. mit Hilfe eines Modells die noch vorhandene Speicherkapazität des Speicherkatalysators von dem Steuergerät 18 ermittelt. Sobald die Speicherkapazität aufgrund einer längeren Beladung des Speicherkatalysators erschöpft ist, wird die Brennkraftmaschine 1 von dem Steuergerät 1.8 in eine fette Betriebsart umgeschaltet, damit der Speicherkatalysator wieder entladen.und damit die Speicherkapaziät wieder vergrößert wird. Sobald der Speicherkatalysator entladen ist, kann von dem Steuergerät 18 wieder umgeschaltet und damit der Speicherkatalysator wieder beladen werden.

Vor dem Katalysator 12 ist ein Lambdasensor 21 vorgesehen, der mit dem Steuergerät 18 gekoppelt ist, und der dazu vorgesehen ist, das vorstehende Be- und Entladen des Speicherkatalysators zu steuern und/oder zu regeln.

Nach dem Katalysator 12 ist ein weiterer Lambdasensor 22 vorgesehen, der ebenfalls mit dem Steuergerät gekoppelt ist.

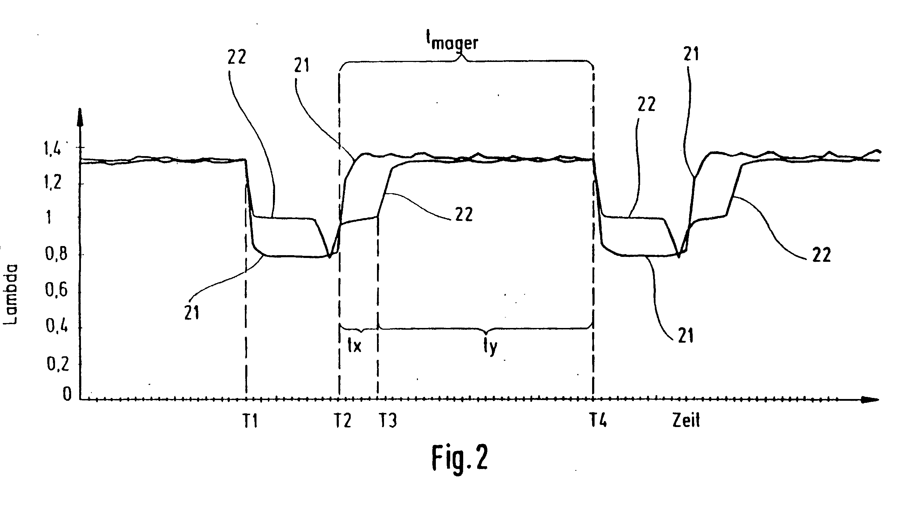

In der Figur 2 sind die Ausgangssignale der Lambdasensoren 21 und 22 über der Zeit aufgetragen. Zur Vereinfachung sind die jeweiligen Ausgangssignale nachfolgend mit denselben Bezugsziffern gekennzeichnet wie die Lambasensoren 21, 22.

Das Ausgangssignal 21 des vor dem Katalysator 12 angeordneten Lambdasensors 21 liegt entweder bei einem mageren Wert von beispielsweise etwa Lambda = 1,3 oder bei einem fetten Wert von beispielsweise etwa Lambda = 0,8. Zwischen diesen beiden Werten springt das Ausgangssignal 21 hin und her. Das Ausgangssignal 21 liegt bei dem mageren Wert, wenn die Brennkraftmaschine 1 z.B. im Schichtbetrieb betrieben wird.

Der Zeitraum, den das Ausgangssignal 21 sich bei dem mageren Wert befindet, ist in der Figur 2 mit tmager gekennzeichnet.

Das Ausgangssignal 22 des nach dem Katalysator 12 angeordneten Lambdasensors 22 liegt entweder bei einem mageren Wert von etwa Lambda = 1,3 oder bei einem etwa stöchiometrischen Wert von etwa Lambda = 1. In dem stöchiometrischen Bereich des Ausgangssignals 22 kann ein Einbruch bzw. Durchbruch vorhanden sein, der das Ausgangssignal 22 kurzzeitig zu einen fetten Wert von z.B. etwa 0,8 verändert. Im Wesentlichen springt das Ausgangssignal 22 jedoch zwischen dem mageren Wert und dem stöchiometrischen Wert hin und her.

Es wird angenommen, dass die Brennkraftmaschine 1 sich in einer mageren Betriebsart, z.B. im Schichtbetrieb befindet und der Speicherkatalysator damit mit NOx-Anteilen des Abgases und damit mit Stickoxiden aufgeladen wird. Weiter wird angenommen, dass der Speicherkatalysator in einem Zeitpunkt T1 seine maximale Speicherkapazität erreicht, also vollständig beladen ist.

Dann wird im Zeitpunkt T1 der Figur 2 aus der mageren Betriebsart der Brennkraftmaschine 1 in eine fette Betriebsart umgeschaltet, z.B. in den Homogenbetrieb, in dem die Brennkraftmaschine 1 z.B. beschleunigt wird. Damit gehen die Ausgangssignale 21 und 22 im Zeitpunkt T1 von dem mageren Wert auf den fetten Wert bzw. auf den stöchiometrischen Wert über.

Der Unterschied zwischen dem Ausgangssignal 21 und dem Ausgangssignal 22 resultiert daraus, dass der Speicherkatalysator nach dem Umschalten z. B. in den Homogenbetrieb Stickoxide abgibt. Während diesem Entladen des Speicherkatalysators entsteht am Ausgang des Katalysators 12, also bei dem Lambdasensor 22 ein stöchiometrischer Wert des Ausgangssignals 22.

Wenn der Speicherkatalysator vollständig entladen ist, dann bricht die fette Betriebsart bis zum Lambdasensor 22 am Ausgang des Katalysators 12 durch, was den Ein- bzw. Durchbruch des Ausgangssignals 22 nach fetten Werten zur Folge hat. Nunmehr wird von dem Steuergerät 18 in einem Zeitpunkt T2 wieder in eine magere Betriebsart zurückgeschaltet, z.B. in den Schichtbetrieb.

Durch dieses Umschalten springt das Ausgangssignal 21 wieder auf den mageren Wert. Das Ausgangssignal 22 bleibt jedoch noch bis zu einem Zeitpunkt T3 bei dem stöchiometrischen Wert. Der Zeitraum von dem Zeitpunkt T2 bis zu dem Zeitpunkt T3 ist in der Figur 2 mit tx gekennzeichnet.

Während des Zeitraums tx ist der Speicherkatalysator in der Lage, zusätzlich zur Beladung mit NOx-Anteilen des Abgases auch Sauerstoff aufzunehmen und zu speichern. Sobald der Speicherkatalysator jedoch keinen weiteren Sauerstoff mehr speichern kann, hat dies einen Sauerstoffüberschuss am Lambdasensor 22 zur Folge und damit ein Ausgangssignal 22 mit einem mageren Wert.

Erst im Zeitpunkt T3 springt somit auch das Ausgangssignal 22 auf den mageren Wert. Diese mageren Werte der Ausgangssignale 21 und 22 werden beibehalten, bis der Speicherkatalysator wieder vollstängig mit NOx-Anteilen des Abgases, also mit Stickoxiden beladen ist. Dann wird in einem Zeitpunkt T4 wieder in eine fette Betriebsart umgeschaltet, um die Entladung des Speicherkatalysators einzuleiten. Der Zeitpunkt T4 entpricht dabei dem Zeitpunkt T1.

Der Zeitraum von dem Zeitpunkt T3 bis zu dem Zeitpunkt T4, in dem das Ausgangssignal 22 sich bei dem etwa mageren Wert befindet, ist in der Figur 2 mit ty gekennzeichnet.

Der Zeitraum tmager setzt sich damit aus den Zeiträumen tx und ty wie folgt zusammen: tmager = tx + ty.

Die Zeiträume tx und ty werden von dem Steuergerät 18 gemessen.

Dann wird von dem Steuergerät 18 ein Wert W wie folgt ermittelt:

$$W = (tx+ty) / tx.$$

Dieser Wert W stellt eine Größe für den Betriebszustand des Speicherkatalysators dar. Durch Messungen z.B. des Herstellers des Speicherkatalysators ist es möglich, einen Maximalwert Wmax anzugeben, der einen Betriebszustand des Speicherkatalysators charakterisiert, der während des Betriebs nicht überschritten werden darf.

Das Steuergerät 18 vergleicht den ermittelten Wert W mit dem vorgegebenen Wert Wmax. Dabei ist es möglich, dass aus mehreren nacheinander ermittelten Werten W zuerst ein Mittelwert gebildet wird, der dann erst mit dem Wert Wmax verglichen wird.

Ist der Wert W kleiner als der Wert Wmax, so bedeutet dies, dass sich der Speicherkatalysator in einem zulässigen Betriebszustand befindet. Ist der Wert W jedoch größer als der Wert Wmax, so kann dies zweierlei bedeuten.

Einerseits ist es möglich, dass der Zeitraum von dem Zeitpunkt T1 bis zu dem Zeitpunkt T2, also der Zeitraum, während dem der Speicherkatalysator entladen worden ist, zu kurz war. Dies hat zur Folge, dass ein Rest an Stickoxiden im Speicherkatalysator verbleibt und so die Speicherfähigkeit des Speicherkatalysators vermindert wird, was seinerseits eine Erhöhung des Werts W zur Folge hat. Wird der Wert Wmax überschritten, so stellt dies eine minimale Speicherfähigkeit des Speicherkatalysators dar.

Als Reaktion erhöht das Steuergerät 18 nachfolgend den Zeitraum von dem Zeitpunkt T1 zu dem Zeitpunkt T2, also den Zeitraum des fetten Betriebs der Brennkraftmaschine 1.
Damit wird der Speicherkatalysator weitgehender entladen und damit die Speicherfähigkeit des Speicherkatalysators wieder erhöht.

Diese Verlängerung der fetten Betriebsart der Brennkraftmaschine 1 kann dabei adaptiv im Rahmen der Modellierung des Be- und Entladens des Speicherkatalysators von dem Steuergerät 18 vorgenommen werden.

Andererseits ist es möglich, dass in dem Speicherkatalysator eine sogenannte Tiefenspeicherung stattgefunden hat. Dies bedeutet, dass sich die Stickoxide und/oder der Sauerstoff nicht nur an der Oberfläche des Speicherkatalysators abgesetzt haben, sondern dass diese Stickoxide und der Sauerstoff in das Material des Speicherkatalysators eingedrungen sind. Eine derartige Tiefenspeicherung kann z.B. dann stattfinden, wenn der Zeitraum, in dem der Speicherkatalysator beladen wird, zu lang ist.

Als Reaktion kann das Steuergerät 18 sofort nochmals in die fette Betriebsart der Brennkraftmaschine 1 umschalten, bevor der Speicherkatalysator wieder beladen wird. Diese erneute fette Betriebsart führt dazu, dass die Tiefenspeicherung von Stickoxiden und/oder von Sauerstoff in dem Speicherkatalysator aufgelöst wird und der Speicherkatalysator vollständig entladen wird.

Als weitere Reaktion kann dann das Steuergerät 18 den Zeitraum, in dem der Speicherkatalysator beladen wird, vermindern. Dies kann dabei adaptiv im Rahmen der Modellierung des Be- und Entladens des Speicherkatalysators von dem Steuergerät 18 vorgenommen werden.

## Patentansprüche

1. Verfahren zum Betreiben einer Brennkraftmaschine (1) insbesondere eines Kraftfahrzeugs, bei dem Kraftstoff in einer fetten und in einer mageren Betriebsart in einen Brennraum (4) eingespritzt wird, bei dem zwischen der fetten und der mageren Betriebsart umgeschaltet wird., bei dem Stickoxide in einem Katalysator (12) gespeichert werden, bei dem nach dem Katalysator (12) das Lambda des Abgases gemessen wird, und bei dem nach einem Umschalten (T2) der Brennkraftmaschine (1) in die magere Betriebsart ein erster Zeitraum (tx) gemessen wird, der vergeht, bis das gemessene Lambda mager wird, **dadurch gekennzeichnet, dass** der Zeitraum, in dem die Brennkraftmaschine (1) fett betrieben wird, verlängert wird oder dass der Zeitraum, in dem die Brennkraftmaschine (1) mager betrieben wird, verkürzt wird, wenn der erste Zeitraum (tx) oder ein davon abhängiger Wert (W) einen vorgegebenen Wert (Wmax) überschreitet.

2. Verfahren nach Anspruch 1, **dadurch gekennzeichnet, dass** nach einem Umschalten (T2) der Brennkraftmaschine (1) in die magere Betriebsart ein zweiter Zeitraum (tmager) gemessen wird, in dem die Brennkraftmaschine (1) mager betrieben wird.

3. Verfahren nach Anspruch 2, **dadurch gekennzeichnet, dass** der erste Zeitraum (tx) und der zweite Zeitraum (tmager) miteinander verknüpft werden.

4. Verfahren nach einem der Ansprüche 2 oder 3, **dadurch gekennzeichnet, dass** ein Wert (W) ermittelt wird, der das Verhältnis des ersten Zeitraums (tx) zu einem dritten Zeitraum (ty) darstellt, wobei die Summe aus dem ersten Zeitraum (tx) und dem dritten Zeitraum (ty) den zweiten Zeitraum (tmager) ergibt.

5. Verfahren nach einem der Ansprüche 1 bis 4, **dadurch gekennzeichnet, dass** die Beeinflussung der Brennkraftmaschine (1) adaptiv in die Steuerung und/oder Regelung eingreift.

6. Steuerelement, insbesondere Read-Only-Memory oder Flash-Memory, für ein Steuergerät (18) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Ausführung eines Verfahrens nach einem der Ansprüche 1 bis 5 .

7. Brennkraftmaschine (1) insbesondere eines Kraftfahrzeugs, mit einem Brennraum (4), in den Kraftstoff in einer fetten und in einer mageren Betriebsart einspritzbar ist, mit einem Katalysator (12), in dem Stickoxide speicherbar sind, mit einem Steuergerät (18) zum Umschalten zwischen der fetten und der mageren Betriebsart, mit einem nach dem Katalysator (12) vorgesehenen Lambdasensor (22), mit dem das Lambda des Abgases gemessen wird, wobei durch das Steuergerät (18) nach einem Umschalten (T2) der Brennkraftmaschine (1) in die magere Betriebsart ein erster Zeitraum (tx) gemessen wird, der vergeht, bis das gemessene Lambda mager wird, **dadurch gekennzeichnet, dass** der Zeitraum, in dem die Brennkraftmaschine (1) fett betrieben wird, verlängert wird oder dass der Zeitraum, in dem die Brennkraftmaschine (1) mager betrieben wird, verkürzt wird, wenn der erste Zeitraum (tx) oder ein davon abhängiger Wert (W) einen vorgegebenen Wert (Wmax) überschreitet.

8. Steuergerät (18) für eine Brennkraftmaschine (1) insbesondere eines Kraftfahrzeugs, wobei die Brennkraftmaschine (1) mit einem Brennraum (4) versehen ist, in den Kraftstoff in einer fetten und in einer mageren Betriebsart einspritzbar ist, sowie mit einem Katalysator (12), in dem Stickoxide speicherbar sind, wobei das Steuergerät (18) zum Umschalten zwischen der fetten und der mageren Betriebsart vorgesehen ist, mit einem nach dem Katalysator (12) vorgesehenen Lambdasensor (22), mit dem das Lambda des Abgases messbar ist, wobei durch das Steuergerät (18) nach einem Umschalten (T2) der Brennkraftmaschine (1) in die magere Betriebsart ein erster Zeitraum (tx) messbar ist, der vergeht, bis das gemessene Lambda mager wird, **dadurch gekennzeichnet, dass** der Zeitraum, in dem die Brennkraftmaschine (1) fett betrieben wird, verlängert wird oder dass der Zeitraum, in dem die Brennkraftmaschine (1) mager betrieben wird, verkürzt wird, wenn der erste Zeitraum (tx) oder ein davon abhängiger Wert (W) einen vorgegebenen Wert (Wmax) überschreitet.

## Claims

1. Method for operating an internal combustion engine (1), in particular of a motor vehicle, in which fuel is injected into a combustion chamber (4) in a rich operating mode and in a lean operating mode, in which the engine is switched between the rich operating mode and the lean operating mode, in which nitrogen oxides are stored in a catalytic converter (12), in which the lambda of the exhaust gas is measured downstream of the catalytic converter (12), and in which a first time period (tx) which elapses until the measured lambda becomes lean is measured after the internal combustion engine (1) has been switched over (T2) to the lean operating mode, **characterized in that** the period of time for which the internal combustion engine (1) is operated under rich conditions is lengthened, or the period of time for which the internal combustion engine (1) is operated under lean conditions is shortened, if the first period of time (tx) or a value (W) that is dependent thereon exceeds a predetermined value (Wmax).

2. Method according to Claim 1, **characterized in that** a second period of time (tmager) for which the internal combustion engine (1) is operated under lean conditions is measured after the internal combustion engine (1) has been switched over (T2) to the lean operating mode.

3. Method according to Claim 2, **characterized in that** the first period of time (tx) and the second period of time (tmager) are linked to one another.

4. Method according to either of Claims 2 or 3, **characterized in that** a value (W) which represents the ratio of the first period of time (tx) to a third period of time (ty) is determined, with the sum of the first period of time (tx) and the third period of time (ty) giving the second period of time (tmager).

5. Method according to one of Claims 1 to 4, **characterized in that** the way in which the internal combustion engine (1) is influenced acts adaptively on the control and/or regulation.

6. Control element, in particular read only memory or flash memory, for a control unit (18) of an internal combustion engine (1), in particular of a motor vehicle, on which a program is stored, which program can run on a computer unit, in particular on a microprocessor, and is suitable for carrying out a method according to one of Claims 1 to 5.

7. Internal combustion engine (1), in particular of a motor vehicle, having a combustion chamber (4), into which fuel can be injected in a rich operating mode and in a lean operating mode, having a catalytic converter (12), in which nitrogen oxides can be stored, having a control unit (18) for switching the engine between the rich operating mode and the lean operating mode, having a lambda sensor (22), which is provided downstream of the catalytic converter (12) and is used to ineasure the lambda of the exhaust gas, the control unit (18) measuring a first period of time (tx) which elapses until the measured lambda becomes lean after the internal combustion engine (1) has been switched over (T2) to the lean operating mode, **characterized in that** the period of time for which the internal combustion engine (1) is operated under rich conditions is lengthened, or the period for which the internal combustion engine (1) is operated under lean conditions is shortened, if the first period of time (tx) or a value (W) that is dependent thereon exceeds a predetermined value (Wmax).

8. Control unit (18) for an internal combustion engine (1), in particular of a motor vehicle, the internal combustion engine (1) being provided with a combustion chamber (4) into which fuel can be injected in a rich operating mode and in a lean operating mode, and with a catalytic converter (12), in which nitrogen oxides can be stored, the control unit (18) being intended to switch the engine between the rich operating mode and the lean operating mode, with a lambda sensor (22), which is provided downstream of the catalytic converter (12) and can be used to measure the lambda of the exhaust gas, it being possible for the control unit (18) to measure a first period of time (tx) which elapses until the measured lambda becomes lean after the internal combustion engine (1) has been switched over (T2) to the lean operating mode, **characterized in that** the period of time for which the internal combustion engine (1) is operated under rich conditions is lengthened or the period of time for which the internal combustion engine (1) is operated under lean conditions is shortened if the first period of time (tx) or a value (W) that is dependent thereon exceeds a predetermined value (Wmax).

## Revendications

1. Procédé de gestion d'un moteur à combustion interne (1), notamment pour un véhicule automobile, selon lequel

on injecte du carburant dans la chambre de combustion (4) en mode riche ou en mode pauvre,

on commute entre le mode riche et le mode pauvre,

on stocke les oxydes d'azote dans un catalyseur (12)

on mesure le coefficient lambda des gaz d'échappement en aval du catalyseur (12) et

après une commutation (T2) du moteur à combustion interne (1) en mode pauvre, on mesure le premier intervalle de temps (tx) qui s'écoule jusqu'à ce que le coefficient lambda mesuré corresponde à une valeur pauvre,

**caractérisé en ce qu'**

on prolonge l'intervalle de temps pendant lequel le moteur à combustion interne (1) fonctionne en mode riche ou on réduit la durée pendant laquelle le moteur (1) fonctionne en mode pauvre si le premier intervalle de temps (tx) ou une valeur (W) qui en dépend, dépassent une valeur prédéterminée (Wmax).

2. Procédé selon la revendication 1,
   **caractérisé en ce qu'**
   après une commutation (T2) du moteur à combustion interne (1) en mode pauvre, on mesure un second intervalle de temps (tpauvre) pendant lequel le moteur à combustion interne (1) fonctionne en mode pauvre.

3. Procédé selon la revendication 2,
   **caractérisé en ce qu'**
   on combine entre le premier intervalle de temps (tx) et le second intervalle de temps (tpauvre).

4. Procédé selon l'une des revendications 2 ou 3,
   **caractérisé en ce qu'**
   on détermine une valeur (W) représentant le rapport entre le premier intervalle de temps (tx) et un troisième intervalle de temps (ty), la somme du premier intervalle de temps (tx) et du troisième intervalle de temps (ty) donnant le second intervalle de temps (tpauvre).

5. Procédé selon l'une des revendications 1 à 4,
   **caractérisé en ce qu'**
   on influence le moteur à combustion interne (1) de manière adaptative par la commande et/ou la régulation.

6. Elément de commande, notamment mémoire morte ou mémoire flash pour un appareil de commande (18) d'un moteur à combustion interne (1), notamment d'un véhicule automobile,
   dans lequel
   est enregistré un programme qui peut être exécuté par un calculateur, notamment un microprocesseur pour la mise en oeuvre du procédé selon l'une des revendications 1 à 5.

7. Moteur à combustion interne (1), notamment d'un véhicule automobile, comportant une chambre de combustion (4) dans laquelle on injecte du carburant en mode riche et en mode pauvre, comprenant un catalyseur (12) dans lequel on stocke des oxydes d'azote, un appareil de commande (18) pour commuter entre eux le mode riche et le mode pauvre, un capteur lambda (22) en aval du catalyseur (12) avec lequel on mesure le coefficient lambda des gaz d'échappement, et après la commutation (T2) du moteur à combustion interne (1) en mode pauvre, on mesure par l'appareil de commande (18), un premier intervalle de temps (tx) qui s'écoule jusqu'à ce que le coefficient lambda mesuré corresponde à un mélange pauvre,

**caractérisé en ce qu'**
on prolonge l'intervalle de temps pendant lequel le moteur à combustion interne (1) fonctionne en mode riche ou on réduit l'intervalle de temps dans lequel le moteur à combustion interne (1) fonctionne en mode pauvre si le premier intervalle de temps (tx) ou une valeur (W) qui en dépend dépassent une valeur prédéterminée (Wmax).

8. Appareil de commande (18) pour un moteur à combustion interne (1), notamment un véhicule automobile, selon lequel le moteur à combustion interne (1) comporte une chambre de combustion (4) dans laquelle on injecte du carburant en mode riche et en mode pauvre, ainsi qu'un catalyseur (12) dans lequel on stocke les oxydes d'azote,
   l'appareil de commande (18) commutant entre le mode riche et le mode pauvre,
   un capteur lambda (22) étant prévu en aval du catalyseur (12) pour mesurer le coefficient lambda des gaz d'échappement,
   l'appareil de commande (18), après commutation (T2) du moteur à combustion interne (1) mesurant un premier intervalle de temps (tx) en mode pauvre, intervalle qui s'écoule jusqu'à ce que le coefficient lambda corresponde à un mode pauvre,
   **caractérisé en ce qu'**
   on prolonge l'intervalle de temps dans lequel le moteur à combustion interne (1) fonctionne en mode riche ou on réduit l'intervalle dans lequel le moteur à combustion interne (1) fonctionne en mode pauvre si le premier intervalle (tx) ou une valeur (W) qui en dépend dépasse une valeur prédéterminée (Wmax).

EP 1 204 814 B1

Fig. 1

9

Fig. 2

EP 1 204 814 B1